# EUROPEAN PATENT APPLICATION

(11) **EP 4 610 844 A1**
(43) Date of publication of application: **03.09.2025**
(21) Application number: 25160223.1
(22) Date of filing: 26.02.2025
(51) Int. Cl.: G06F 16/2455, G06F 16/245, G06F 16/22

(54) **DISTRIBUTED PROCESSING SYSTEM AND METHOD OF OPERATING THE SAME**

(30) Priority: 27.02.2024 KR 20240027882
(71) Applicant: SK hynix Inc., Bubal-eub Icheon-si Gyeonggi-do 17336 (KR)
(72) Inventor: JUN, Jae Yung, 17336 Icheon-si, Gyeonggi-do (KR); KIM, Ye Soo, 17336 Icheon-si, Gyeonggi-do (KR); AHN, Hyun Woong, 17336 Icheon-si, Gyeonggi-do (KR); LEE, Joo Hee, 17336 Icheon-si, Gyeonggi-do (KR)
(74) Representative: Isarpatent

(57) **Abstract**

Provided herein may be a distributed processing system and a method of operating the same. The distributed processing system may include a storage device, a plurality of computing nodes, and a shared memory device. The storage device may store a database including a plurality of tables. The plurality of computing nodes may generate a target map of the first table by applying a target function to a first table among the plurality of tables, and divide a second table among the plurality of tables into a plurality of partitions. The shared memory device may store the target map of the first table. The plurality of computing nodes may execute queries including a target operation using different partitions among the plurality of partitions of the second table and the target map.

## Description

### BACKGROUND

### 1. Field of Invention

Various embodiments of the present disclosure generally relate to an electronic device, and more particularly to a distributed processing system and a method of operating the distributed processing system.

### 2. Description of Related Art

A join task is one of the most basic tasks performed on data stored in a database. The join task may be used to combine multiple tables so that data in the tables may be selected through a query. A query for joining two tables may specify a scheme in which the tables are joined, and a database cluster may distribute tasks, which evaluate conditions used to combine pieces of data in multiple tables with each other and join the tables, to multiple nodes.

### SUMMARY

Various embodiments of the present disclosure are directed to a distributed processing system that includes a plurality of computing nodes and processes a join operation using a shared memory device, and a method of operating the distributed processing system.

An embodiment of the present disclosure may provide for a distributed processing system. The distributed processing system may include a storage device, a plurality of computing nodes, and a shared memory device. The storage device may store a database including a plurality of tables. The plurality of computing nodes may generate a target map of a first table by applying a target function to the first table among the plurality of tables, and divide a second table among the plurality of tables into a plurality of partitions. The shared memory device may store the target map of the first table. The plurality of computing nodes may execute queries including a target operation using different partitions among the plurality of partitions of the second table and the target map.

An embodiment of the present disclosure may provide for a method of operating a distributed processing system. The method may include generating a target map by applying a target function to a first table among a plurality tables included in a database, storing the target map in a shared memory device, randomly dividing entries of a second table among the plurality of tables into a first partition and a second partition, storing the first partition in a first computing node, and storing the second partition in a second computing node, performing a first join operation using the first partition stored in the first computing node and the target map stored in the shared memory device, and performing a second join operation using the second partition stored in the second computing node and the target map stored in the shared memory device.

### BRIEF DESCRIPTION OF THE DRAWINGS

FIG. 1 is a diagram illustrating a configuration of a distributed processing system according to an embodiment of the present disclosure.
FIG. 2 is a diagram illustrating a join operation performed in the distributed processing system of FIG. 1.
FIG. 3 is a diagram illustrating a configuration of a distributed processing system and a join operation according to an embodiment of the present disclosure.
FIG. 4 is a diagram illustrating a hash map build-up operation according to an embodiment of the present disclosure.
FIG. 5 is a diagram illustrating a join operation between tables in structured query language (SQL).
FIG. 6 is a diagram illustrating a hash map.
FIG. 7 is a flowchart illustrating a method of operating a distributed processing system according to an embodiment of the present disclosure.
FIG. 8 is a flowchart illustrating a hash map build-up operation according to an embodiment of the present disclosure.

### DETAILED DESCRIPTION

Specific structural or functional descriptions in the embodiments of the present disclosure introduced in this specification are provided as examples to describe embodiments according to the concept of the present disclosure. The embodiments according to the concept of the present disclosure may be practiced in various forms, and should not be construed as being limited to the embodiments described in the specification.

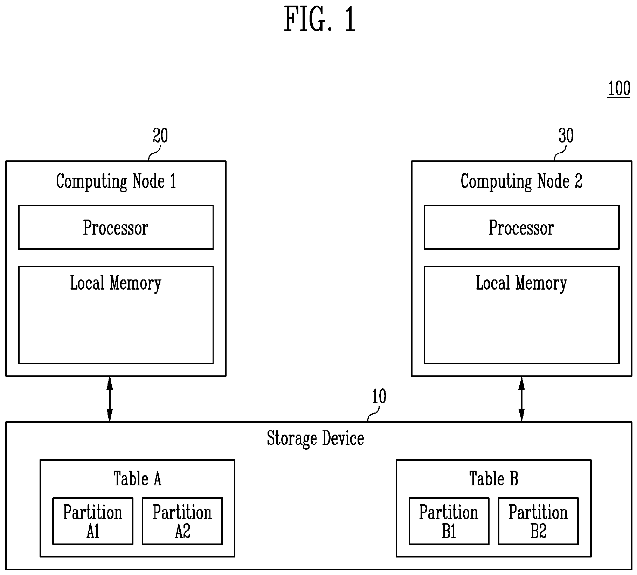

FIG. 1 is a diagram illustrating a configuration of a distributed processing system 100 according to an embodiment of the present disclosure.

Referring to FIG. 1, the distributed processing system 100 may refer to a single system into which a plurality of computing nodes present on a network are configured in parallel. A cluster computing system, which is a type of the distributed processing system 100, may include computing nodes coupled strongly over a network, and workload of the cluster computing system may be distributed among a plurality of computing nodes and processed in parallel by the computing nodes.

In FIG. 1, the distributed processing system 100 may include a storage device 10 and a plurality of computing nodes. The plurality of computing nodes may include a first computing node 20 and a second computing node 30. The storage device 10 may be a device which stores data, and may include a volatile memory and a nonvolatile memory. The volatile memory may include a static random access memory (SRAM) (SRAM) or a dynamic RAM (DRAM). The nonvolatile memory may include a solid state drive (SSD), a hard disk, a multimedia card (e.g., an MMC or eMMC), a universal serial bus (USB) storage device, a universal flash storage (UFS) device, a peripheral component interconnection card-type storage device (e.g., a PCI, or PCI-E), etc.

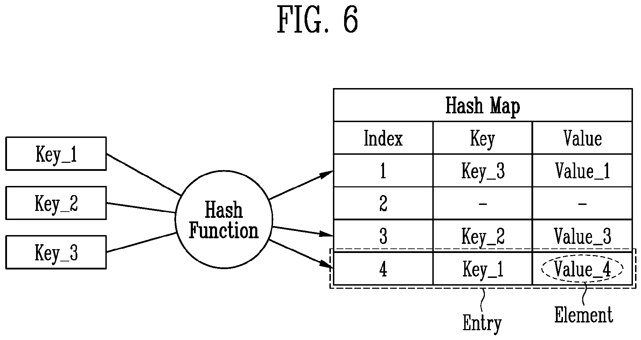

The storage device 10 may store a database including a plurality of tables. The plurality of tables may include a table A and a table B. Each of the table A and table B may be divided into a plurality of partitions. For example, elements in the table A may be randomly divided into partition A1 and partition A2. The elements may refer to pieces of data included in entries constituting the table A. A relationship between the entries and the elements will be described later with reference to FIG. 6. The elements in the partition A1 and the elements in the partition A2 may not be disjoint from each other due to a random division method. The elements in the table B may be randomly divided into partition B1 and partition B2. The elements in the partition B1 and the elements in the partition B2 may not be disjoint from each other due to a random division method.

Each of the first computing node 20 and the second computing node 30 may include a processor which performs a join operation, and a local memory which stores partitions required for the join operation.

However, for the join operation, the partitions stored in the local memory need to be shuffled to be disjoint from each other. In FIG. 1, because the partition A1 and partition A2 are not disjoint from each other and the partition B1 and partition B2 are not disjoint from each other, the join operation cannot be immediately performed.

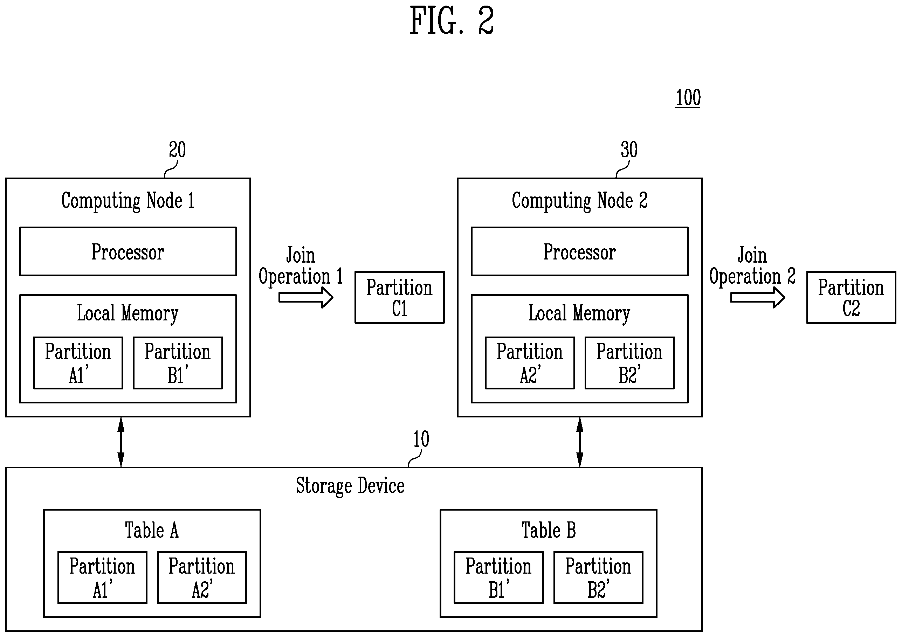

FIG. 2 is a diagram illustrating a join operation performed in the distributed processing system of FIG. 1.

Referring to FIG. 2, the configuration of the distributed processing system 100 is the same as that described with reference to FIG. 1. To perform a join operation, the table A may be divided into partition A1' and partition A2'. Elements in the partition A1' and elements in the partition A2' may be disjoint from each other. In order to divide the table A into the partition A1' and partition A2', data shuffle for reclassifying elements between the partition A1 and partition A2, described with reference to FIG. 1, may be performed.

To perform a join operation, the table B may be divided into partition B1' and partition B2'. Elements in the partition B1' and elements in the partition B2' may be disjoint from each other. In order to divide the table B into the partition B1' and partition B2', data shuffle for reclassifying elements between the partition B1 and partition B2, described with reference to FIG. 1, may be performed.

The local memory of the first computing node 20 may store the partition A1' and partition B1' received from the storage device 10. The processor of the first computing node 20 may perform a first join operation using the partition A1' and partition B1' stored in the local memory. As the result of performing the first join operation, partition C1 may be generated.

The local memory of the second computing node 30 may store the partition A2' and partition B2' received from the storage device 10. The processor of the second computing node 30 may perform a second join operation using the partition A2' and partition B2' stored in the local memory. As the result of performing the second join operation, partition C2 may be generated.

In FIG. 2, a query which joins the table A and table B may be executed. The query may include the first join operation and the second join operation. The first join operation may generate the partition C1 using the partition A1' and partition B1'. The second join operation may generate the partition C2 using the partition A2' and partition B2'.

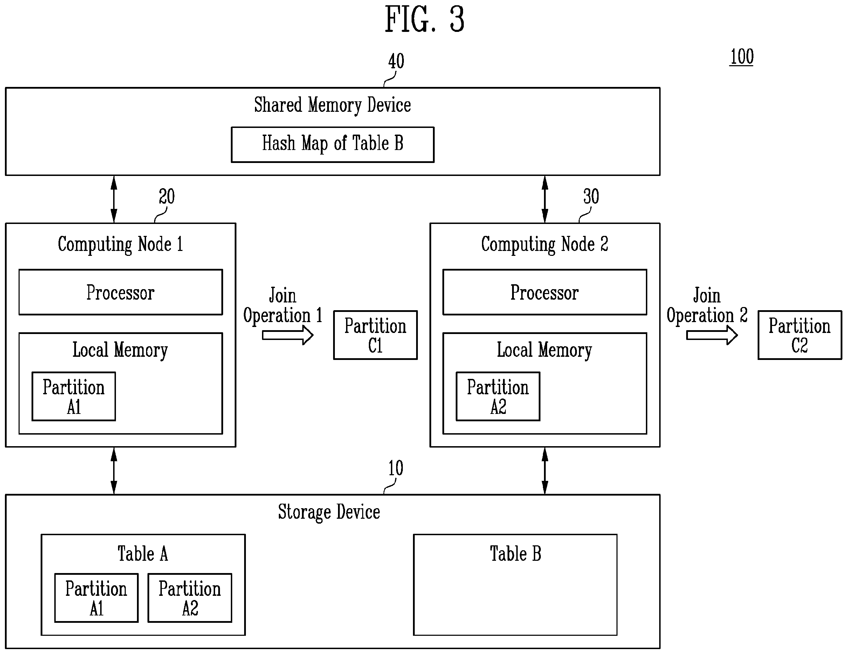

FIG. 3 is a diagram illustrating a configuration of a distributed processing system 100A and a join operation according to an embodiment of the present disclosure.

Referring to FIG. 3, the distributed processing system 100A may further include a shared memory device 40, together with the storage device 10, the first computing node 20, and the second computing node 30, described with reference to FIG. 1.

In an embodiment, the storage device 10 and the shared memory device 40 may be included in the same data storage system. The data storage system may include a compute express link (CXL) memory system or a pooled memory system. The storage device 10 and the shared memory device 40 may be memory regions partially allocated from the CXL memory system or the pooled memory system.

The shared memory device 40, which is a volatile memory, may be implemented as a static RAM (SRAM) or a dynamic RAM (DRAM). In various embodiments, the shared memory device 40 may be a nonvolatile memory, and may be implemented as a solid state drive (SSD), a hard disk, a universal serial bus (USB) storage device, a universal flash storage (UFS) device, or a peripheral component interconnection (PCI) card-type storage device.

The shared memory device 40 may store a hash map generated by applying a hash function to the table B.

The local memory of the first computing node 20 may store the partition A1 received from the storage device 10. The processor of the first computing node 20 may perform a first join operation using the partition A1 stored in the local memory and the hash map of the table B stored in the shared memory device 40. In detail, the processor may look up the same entry as the entry of the partition A1 in the hash map, and may perform the first join operation using the entry, looked up in the hash map, and the partition A1. As the result of performing the first join operation, the partition C1 may be generated.

The local memory of the second computing node 30 may store the partition A2 received from the storage device 10. The processor of the second computing node 30 may perform a second join operation using the partition A2 stored in the local memory and the hash map of the table B stored in the shared memory device 40. In detail, the processor may look up the same entry as the entry of the partition A2 in the hash map, and may perform the second join operation using the entry looked up in the hash map and the partition A2. As the result of performing the second join operation, the partition C2 may be generated.

According to the embodiment described with reference to FIG. 3, because the first computing node 20 and the second computing node 30 perform join operations using the hash map of the table B stored in the shared memory device 40, data shuffle between the partition A1 and partition A2 of the table A described with reference to FIG. 1 may not be required. The reason for this is that, even though the elements in the partition A1 and the elements in the partition A2 are not disjoint from each other, the first computing node 20 performs the first join operation by extracting only entries matching (i.e., identical to) the entries of the partition A1 from the hash map of the table B, and the second computing node 30 performs the second join operation by extracting only entries matching the entries of the partition A2 from the hash map of the table B.

Therefore, regardless of the elements in the table A, the table A may be randomly divided into the partition A1 and partition A2. Because the table A does not need to be divided into the partition A1' and partition A2' which are disjoint from each other, unnecessary overhead attributable to data shuffle may be eliminated, and the performance of join operations may be improved.

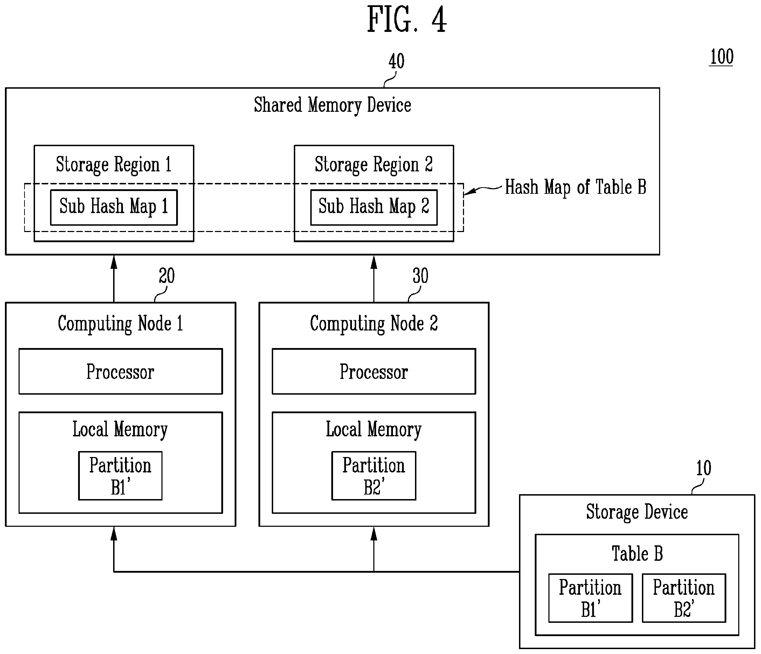

FIG. 4 is a diagram illustrating a hash map build-up operation according to an embodiment of the present disclosure.

Referring to FIG. 4, a first computing node 20 and a second computing node 30 may perform a hash map build-up operation of generating hash maps of the table B in parallel and storing the hash maps in the shared memory device 40.

Such a hash map may be a data structure in which data is stored as a key-value pair, and may provide fast access to entries and an easy entry insertion task based on keys. The hash map may convert each key into an index, indicating a location at which a value corresponding to the key is stored, by using a technique called hashing. Hashing may be a process of inputting input data such as a string or a number to a hash function and converting the input data into a fixed-size value or a hash code. The hash code may be obtained by performing various calculations such as mathematical calculations or bitwise operations on the input data. The hash function may evenly distribute data to the entirety of the hash table that is a data structure used to store key-value pairs, thus allowing for continuous time complexity in tasks such as insertion, lookup (search), and deletion, and enabling fast data access.

The entries of the table B stored in the storage device 10 may be divided into the partition B1' and partition B2'. The elements included in the entries of the partition B1' may be disjoint from the elements included in the entries of the partition B2'.

The local memory of the first computing node 20 may store the partition B1' received from the storage device 10. The processor of the first computing node 20 may generate a first sub-hash map in which a hash function is applied to the partition B1'. The processor may flush the first sub-hash map to the shared memory device 40 in response to a flush request.

The local memory of the second computing node 30 may store the partition B2' received from the storage device 10. The processor of the second computing node 30 may generate a second sub-hash map in which a hash function is applied to the partition B2'. The processor may flush the second sub-hash map to the shared memory device 40 in response to a flush request.

The shared memory device 40 may include a first storage region and a second storage region. The first computing node 20 and the second computing node 30 may access the shared memory device 40 using a virtual address corresponding to the entire storage region of the shared memory device 40.

For example, the first computing node 20 may be allocated with the first storage region out of the entire storage region of the shared memory device 40. The second computing node 30 may be allocated with the second storage region out of the entire storage region of the shared memory device 40. The first computing node 20 may be granted a read right (authority) to the entire storage region and a write right to the allocated first storage region. The second computing node 30 may be granted a read right to the entire storage region and a write right to the allocated second storage region.

Therefore, the first computing node 20 may request the second computing node 30 to translate a virtual address corresponding to the second storage region into a physical address of the second storage region when accessing the second storage region. The second computing node 30 may request the first computing node 20 to translate a virtual address corresponding to the first storage region into a physical address of the first storage region when accessing the first storage region. In an embodiment, in order to reduce the complexity of translation between the virtual address and the physical address, the virtual address corresponding to the entire storage region may be mapped one-to-one to the physical address of the entire storage region.

The first storage region may store the first sub-hash map received from the first computing node 20, and the second storage region may store the second sub-hash map received from the second computing node 30. The hash map of the table B stored in the shared memory device 40 may be composed of the first sub-hash map stored in the first storage region and the second sub-hash map stored in the second storage region.

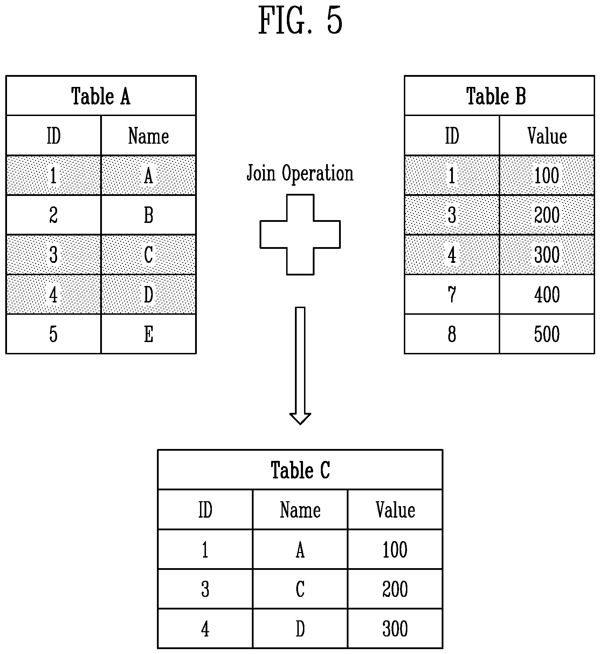

FIG. 5 is a diagram illustrating a join operation between tables in structured query language (SQL).

Referring to FIG. 5, a join operation between the table A and table B may be performed. The join operation may be an operation of combining normalized tables, and join operation types may include inner join, left join, right join, outer join, etc. In FIG. 5, the inner join will be described by way of example for convenience of description. The inner join may extract results for rows in which data is duplicated in two joined tables.

In FIG. 5, the table A may include ID and Name as items. The table B may include ID and Value as items. In the case of the join operation, new table C may be generated based on a common item between the table A and table B.

The table C may include all of ID, Name, and Value, which are the items of the table A and table B, and may be configured such that pieces of data are arranged based on ID, which is the common item between the table A and table B. Therefore, the table C may include rows in which the table A and table B overlap each other based on ID, that is, rows in which IDs are 1, 3, and 4, as entries.

FIG. 6 is a diagram illustrating a hash map.

Referring to FIG. 6, the hash map may be a data structure which stores key-value pairs, and may store key and data using a value, converted by applying a hash function to each key, as an index. Because the hash map is searched using the indices of arrays based on hashed keys, access such as entry search, insert, and delete operations may be fast and simple. Hashing may be a task of applying a hash function to input data having an arbitrary length and then converting the input data into a fixed-size value.

In FIG. 6, when Key_1 is input to the hash function, the index of Key_1 may be changed to 1. The index of Key_2 may be changed to 3, and the index of Key_3 may be changed to 4. In the hash map having a data structure of key-value pairs, Key_3 and Value_1 may form a pair, Key_2 and Value_3 may form a pair, and Key_1 and Value_4 may form a pair. In the hash map, one key-value pair may constitute one entry, and one piece of data stored in each item may be referred to as an element.

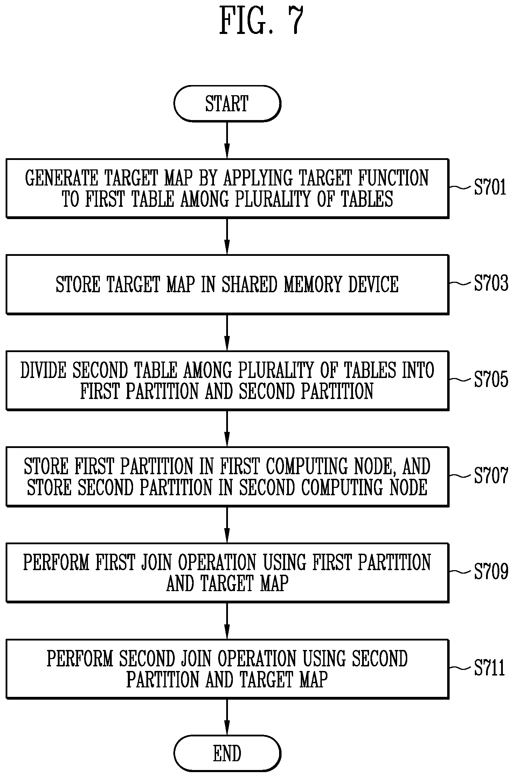

FIG. 7 is a flowchart illustrating a method of operating a distributed processing system according to an embodiment of the present disclosure.

Referring to FIG. 7, at operation S701, the distributed processing system may generate a target map by applying a target function to a first table among a plurality of tables. For example, a plurality of computing nodes included in the distributed processing system may generate a target map, composed of a plurality of sub-target maps, in parallel.

At operation S703, the distributed processing system may store the target map in a shared memory device. For example, respective computing nodes may flush the generated sub-target maps to the shared memory device in response to a flush request.

At operation S705, the distributed processing system may divide entries of a second table among the plurality of tables into a first partition and a second partition. The first partition and the second partition may be partitions obtained by randomly dividing the entries of the second table. Therefore, elements included in the entries of the first partition and elements included in the entries of the second partition may not be disjoint from each other.

At operation S707, the distributed processing system may store the first partition in a first computing node, and may store the second partition in a second computing node.

At operation S709, the distributed processing system may perform a first join operation using the first partition and the target map. For example, the first computing node may look up an entry matching the entry of the first partition in the target map stored in the shared memory device, and may perform the first join operation using the looked-up entry and the first partition.

At operation S711, the distributed processing system may perform a second join operation using the second partition and the target map. For example, the second computing node may look up an entry matching the entry of the second partition in the target map stored in the shared memory device, and may perform the second join operation using the looked-up entry and the second partition.

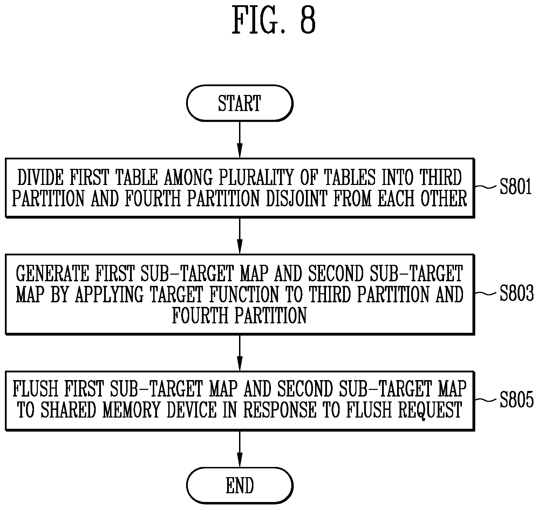

FIG. 8 is a flowchart illustrating a hash map build-up operation according to an embodiment of the present disclosure.

Referring to FIG. 8, at operation S801, the distributed processing system may divide entries of a first table among a plurality of tables into a third partition and a fourth partition which are disjoint from each other. Elements included in entries of the third partition may be disjoint from elements included in entries of the fourth partition. For example, the storage device of the distributed processing system may divide the first table among the plurality of tables stored therein into the third partition and the fourth partition.

At operation S803, the distributed processing system may generate a first sub-target map and a second sub-target map by applying a target function to the third partition and the fourth partition, respectively. For example, the first computing node of the distributed processing system may generate the first sub-target map by applying the target function to the third partition received from the storage device. The second computing node may generate the second sub-target map by applying the target function to the fourth partition received from the storage device.

At operation S805, the distributed processing system may flush the first sub-target map and the second sub-target map to the shared memory device in response to a flush request. For example, the first computing node may flush the first sub-target map to the shared memory device in response to the flush request, and the second computing node may flush the second sub-target map to the shared memory device in response to the flush request.

According to embodiments of the present disclosure, there are provided a distributed processing system that includes a plurality of computing nodes and processes a join operation using a shared memory device, and a method of operating the distributed processing system.

## Claims

1. A distributed processing system comprising:
a storage device configured to store a database including a plurality of tables;
a plurality of computing nodes configured to generate a target map of a first table by applying a target function to the first table among the plurality of tables, and divide a second table among the plurality of tables into a plurality of partitions; and
a shared memory device configured to store the target map of the first table,
wherein the plurality of computing nodes is configured to execute queries including a target operation using different partitions among the plurality of partitions of the second table and the target map.

2. The distributed processing system according to claim 1, wherein:
the target operation comprises a first join operation and a second join operation; and
the plurality of computing nodes comprise
a first computing node configured to perform the first join operation using a first partition of the second table and the target map, and
a second computing node configured to perform the second join operation using a second partition of the second table and the target map.

3. The distributed processing system according to claim 2, wherein:
the first computing node is configured to perform the first join operation by looking up an entry identical to an entry of the first partition in the target map; and
the second computing node is configured to perform the second join operation by looking up an entry identical to an entry of the second partition in the target map.

4. The distributed processing system according to claim 2, wherein each of the first partition and the second partition includes partitions into which entries of the second table are randomly divided.

5. The distributed processing system according to claim 2, wherein:
the target map comprises a first sub-target map and a second sub-target map;
the first computing node is configured to generate the first sub-target map by applying the target function to a third partition of the first table; and
the second computing node is configured to generate the second sub-target map by applying the target function to a fourth partition of the first table.

6. The distributed processing system according to claim 5, wherein elements included in entries of the third partition are disjoint from elements included in entries of the fourth partition.

7. The distributed processing system according to claim 2, wherein each of the first computing node and the second computing node is configured to access the shared memory device based on a virtual address corresponding to an entire storage region of the shared memory device.

8. The distributed processing system according to claim 7, wherein:
the first computing node and the second computing node are allocated a first storage region and a second storage region, respectively, among the entire storage region;
the first computing node is granted a read right to the entire storage region and a write right to the first storage region; and
the second computing node is granted a read right to the entire storage region and a write right to the second storage region.

9. The distributed processing system according to claim 8, wherein:
the first computing node is configured to, when accessing the second storage region, request the second computing node to translate a virtual address corresponding to the second storage region into a physical address of the second storage region; and
the second computing node is configured to, when accessing the first storage region, request the first computing node to translate a virtual address corresponding to the first storage region into a physical address of the first storage region.

10. The distributed processing system according to claim 7, wherein a virtual address of the shared memory device is mapped one-to-one to a physical address corresponding to the entire storage region of the shared memory device.

11. A method of operating a distributed processing system, the method comprising:
generating a target map by applying a target function to a first table among a plurality tables included in a database;
storing the target map in a shared memory device;
randomly dividing entries of a second table among the plurality of tables into a first partition and a second partition;
storing the first partition in a first computing node, and storing the second partition in a second computing node;
performing a first join operation using the first partition stored in the first computing node and the target map stored in the shared memory device; and
performing a second join operation using the second partition stored in the second computing node and the target map stored in the shared memory device.

12. The method according to claim 11, wherein:
performing the first join operation comprises performing, by the first computing node, the first join operation by looking up an entry identical to an entry of the first partition in the target map; and
performing the second join operation comprises performing, by the second computing node, the second join operation by looking up an entry identical to an entry of the second partition in the target map.

13. The method according to claim 11, wherein:
generating the target map comprises
dividing entries of the first table into a third partition and a fourth partition,
generating, by the first computing node, a first sub-target map by applying the target function to the third partition, and
generating, by the second computing node, a second sub-target map by applying the target function to the fourth partition; and
elements included in entries of the third partition are disjoint from elements included in entries of the fourth partition.

14. The method according to claim 13, wherein storing the target map in the shared memory device comprises:
flushing, by the first computing node, the first sub-target map to the shared memory device in response to a flush request; and
flushing, by the second computing node, the second sub-target map to the shared memory device in response to the flush request.

15. The method according to claim 11, further comprising:
allocating a first storage region out of an entire storage region of the shared memory device to the first computing node;
allocating a second storage region out of the entire storage region to the second computing node;
granting a read right to the entire storage region and a write right to the first storage region to the first computing node; and
granting a read right to the entire storage region and a write right to the second storage region to the second computing node.
